# EUROPÄISCHE PATENTSCHRIFT

(11) **EP 2 795 591 B1**
(45) Veröffentlichungstag und Bekanntmachung des Hinweises auf die Patenterteilung: **27.02.2019**
(21) Anmeldenummer: 12816243.5
(22) Anmeldetag: 19.12.2012
(51) Int. Cl.: G07D 7/08

(54) **VERFAHREN UND VORRICHTUNG ZUR UNTERSUCHUNG EINES WERTDOKUMENTS**
METHOD AND DEVICE FOR EXAMINING A DOCUMENT OF VALUE
PROCÉDÉ ET DISPOSITIF D'EXAMEN D'UN DOCUMENT DE VALEUR

(30) Priorität: 21.12.2011 DE 102011121912
(43) Veröffentlichungstag der Anmeldung: 29.10.2014
(73) Patentinhaber: Giesecke+Devrient Currency Technology GmbH, 81677 München (DE)
(72) Erfinder: DOMKE, Jan, 85591 Vaterstetten (DE); SCHOLZ, Ingo, 28355 Bremen (DE)
(86) Internationale Anmeldenummer: PCT/EP2012/005273
(87) Internationale Veröffentlichungsnummer: WO 2013/091856

(56) Entgegenhaltungen:
- WO-A1-2005/013207
- WO-A2-02/10716
- WO-A2-2004/055740
- US-A1- 2010 060 881
- US-A1- 2010 243 729

## Beschreibung

Die vorliegende Erfindung betrifft ein Verfahren zur Untersuchung eines Wertdokuments und eine entsprechende Vorrichtung zur Durchführung des Verfahrens.

Unter Wertdokumenten werden dabei blatt- oder kartenförmige Gegenstände verstanden, die beispielsweise einen monetären Wert oder eine Berechtigung repräsentieren und daher nicht beliebig durch Unbefugte herstellbar sein sollen. Solche Wertdokumente weisen nicht einfach herzustellende oder zu kopierende Merkmale auf, deren Vorhandsein ein Indiz für die Echtheit, d.h. die Herstellung durch eine dazu befugten Stelle, ist. Wichtige Beispiele für solche Wertdokumente sind Chipkarten, Coupons, Gutscheine, Schecks und insbesondere Banknoten.

Bestimmte Wertdokumenttypen weisen als durch den Menschen erkennbares Sicherheitsmerkmal ein Fenster auf, das eine gegenüber anderen Abschnitten des Wertdokuments besondere optische Eigenschaften, beispielweise erhöhte Transparenz bzw. Transluzenz, aufweist.

US 2010/0060881 A1 beschreibt ein System und ein Verfahren zum automatischen Erfassen der Anwesenheit einer Perforation, eines Risses oder eines Sicherheitsmerkmals mit einem transparenten Fenster in einer Banknote. Das System weist eine optische Erfassungseinrichtung, eine Ultraschall-Erfassungseinrichtung und eine Transporteinrichtung zum Transportieren der Banknote entlang eines definierten Pfades in der Nähe der Erfassungsrichtungen auf. Jede Erfassungsvorrichtung umfasst eine Vielzahl von optischen Sendern und entsprechenden optischen Empfängern, die den Banknotenpfad einklammern. Eine Recheneinrichtung ist ebenfalls vorgesehen, um aus der Ausgabe der optischen Erkennungseinrichtung das Vorhandensein einer optischen Anomalie in der Banknote zu bestimmen, aus der Ausgabe des Ultraschall-Erfassungseinrichtung das Vorhandensein einer Ultraschall-Abnormalität in der Banknote zu bestimmen und das Vorhandensein einer Perforation, eines Risses oder eines Merkmals mit einem transparenten Fenster auf der Grundlage der Ergebnisse der optischen Abnormalitätsbestimmung oder Ultraschall-Abnormalitätsbestimmung zu bestimmen.

Der vorliegenden Erfindung liegt die Aufgabe zugrunde, die Prüfung von Wertdokumenten mit einem Fenster zu ermöglichen.

Die Aufgabe wird gelöst durch ein Verfahren nach Anspruch 1.

Es kann nun die Aufgabe insbesondere darin bestehen, die Prüfung auf Echtheit bzw. das Vorliegen einer Fälschung durchzuführen. In Abhängigkeit von dem Ergebnis der Prüfung kann dann vorzugsweise ein Signal gebildet werden, das einen Hinweis auf die Echtheit des Wertdokuments darstellt und/oder das einen Hinweis auf das Vorliegen einer Fälschung des Wertdokuments darstellt Das Signal kann so gebildet werden, daß es einen Hinweis auf die Echtheit des Wertdokuments nur darstellt, wenn die vorgegebene Anzahl von Orten mit der geforderten Ultraschalltransmission in dem Prüfbereich gefunden wurde, und/oder daß es einen Hinweis auf das Vorliegen einer Fälschung immer darstellt, wenn diese Anzahl nicht gefunden wurde. Das Signal kann insbesondere auch zur Speicherung eines entsprechenden Echtheitswertes in einem Speicher einer bei der Prüfung verwendeten Auswerteeinrichtung bzw. Datenverarbeitungseinrichtung verwendet werden, der entsprechende Hinweise darstellt und im weiteren verwendet werden kann.

Die Aufgabe wird weiter gelöst durch eine Vorrichtung zur Untersuchung eines Wertdokuments nach Anspruch 12.

Vorzugsweise umfaßt die Vorrichtung weiter eine Transporteinrichtung zum Transportieren des Wertdokuments durch den Ultraschalltransmissionssensor, wobei die Vorrichtung so ausgebildet ist, daß die Transmissionswerte während des Transports des Wertdokuments durch den Ultraschalltransmissionssensor erfaßt werden. Die Steuer- und Auswerteeinrichtung kann insbesondere eine Datenverarbeitungseinrichtung, die beispielsweise einen FPGA und/oder einen Mikrocontroller und/oder einen Prozessor und einen Speicher mit einem darin gespeicherten Datenverarbeitungsprogramm umfassen kann, aufweisen, die, wie oben erwähnt, insbesondere die Prüfung durchführt

Erfindungsgemäß wird zur Prüfung Ultraschall verwendet. Unter Ultraschall wird im Rahmen der vorliegenden Erfindung Schall mit einer Frequenz größer als 20 kHz verstanden. Der Ultraschall kann dabei kontinuierlich oder vorzugsweise gepulst auf das Wertdokument abgegeben werden. Unter der Frequenz wird dabei, insbesondere im Fall einer gepulsten Abgabe, der Amplitudenmittelwert des abgegebenen Ultraschalls, d. h. der mit der frequenzabhängigen relativen Amplitude gewichtete Mittelwert über das Frequenzspektrum verstanden.

Zur Ermittlung der Meßwerte für die Ultraschalltransmission, die im Folgenden auch als Transmissionswerte bezeichnet werden, weist die Vorrichtung den ortsauflösenden Ultraschalltransmissionssensor auf, der zur Verwendung in einem vorgegebenen Frequenzbereich ausgebildet ist. Der Ultraschalltransmissionssensor kann vorzugsweise sich gegenüberliegende Ultraschallsender und -empfänger aufweisen, zwischen denen das Wertdokument zur Erfassung der Meßwerte mittels einer Transporteinrichtung hindurchtransportiert wird, wobei während des Hindurchtransports die Meßwerte erfaßt werden. Die Meßwerte brauchen bei fester Intensität des von den Ultraschallsendern abgegebenen Ultraschalls nur die Intensität oder Amplitude des von den jeweiligen Ultraschallwandlern empfangenen Ultraschalls zu beschreiben. Es ist jedoch auch möglich, daß die Meßwerte ein Verhältnis von empfangener Intensität des transmittierten Ultraschalls und Intensität des gesendeten Ultraschalls aufweisen.

Vorzugsweise besitzt der Ultraschall eine Frequenz im Bereich von 50 kHz bis 800 kHz, besonders bevorzugt zwischen 150 kHz und 600 kHz. Der Ultraschallsensor ist dann vorzugsweise zur Abgabe von Ultraschall mit einer Frequenz zwischen 50 kHz bis 800 kHz, besonders bevorzugt zwischen 150 kHz und 600 kHz ausgebildet.

Erfindungsgemäß wird unter Verwendung der Meßwerte geprüft, ob für eine vorgegebene Anzahl von Orten in einem vorgegebenen Prüfbereich die Ultraschalltransmission nach einem vorgegebenen Kriterium größer ist die Mindestultraschalltransmission.

Der Prüfbereich kann dabei in Abhängigkeit von dem Wertdokumenttyp und vorzugsweise der Lage des Wertdokuments bei der Erfassung der Ultraschalltransmission vorgegeben werden. Unter der Lage des Wertdokuments wird dabei verstanden, welche Seite des Wertdokuments in eine vorgegebene Richtung, beispielsweise orthogonal zu einer Ebene des Wertdokuments bei der Erfassung der Ultraschalltransmission, z. B. nach oben, zeigt, und welche der Kanten des Wertdokuments in Transportrichtung vorne ist. Der Prüfbereich ist so gewählt, daß unter Berücksichtigung typischer herstellungsbedingter Schwankungen in der Position des Fensters auf bzw. in dem Wertdokument das Fenster mit hoher Sicherheit erfaßt werden kann, d. h. das Fenster in dem Prüfbereich liegt. Der Prüfbereich ist daher vorzugsweise größer als das Fenster.

Der Prüfbereich kann unter Verwendung von vorgegebenen echten Referenzwertdokumenten des vorgegebenen Wertdokumenttyps festgelegt und für jede der Lagen vorgegeben sein.

Das Verfahren kann dann den Schritt umfassen, daß eine Lage des Wertdokuments bei der Erfassung der Ultraschalltransmission ermittelt wird und der Prüfbereich in Abhängigkeit von der ermittelten Lage vorgegeben wird.

Die Vorrichtung kann dazu eine Einrichtung zur Ermittlung der Lage des Wertdokuments bei der Erfassung der Ultraschalltransmission umfassen und die Steuer- und Auswerteeinrichtung dazu ausgebildet sein, den Prüfbereich in Abhängigkeit von der ermittelten Lage vorgegeben wird. Die Lage kann beispielsweise mittels eines optischen Sensors, beispielsweise eines Remissionssensors ermittelt werden, der dann die genannte Einrichtung darstellt Alternativ ist es möglich, für jede Lage einen Prüfbereich vorzugeben und die Prüfung für jeden der Prüfbereiche durchzuführen.

Es ist aber auch möglich, daß mittels eines optischen Sensors ein digitales Bild des Wertdokuments erfaßt wird und unter Verwendung des Bildes der Prüfbereich vorgegeben wird. Dazu kann vorzugsweise in dem digitalen Bild, das im Rahmen der vorliegenden Erfindung durch mittels des optischen Sensors erfaßten Pixeldaten für Pixel des Bildes, nach dem Fenster gesucht und dessen Position und Größe ermittelt werden. Diese Daten können dann zur Ermittlung des Prüfbereichs verwendet werden, der beispielsweise um einen vorgegebenen Wert in jeder Richtung größer sein kann, als das optisch erkannte Fenster. Die Vorrichtung kann dazu einen optischen Sensor zur Erfassung eines optischen Bildes, vorzugsweise eines Transmissionsbildes, des Wertdokuments und Bildung eines digitalen Bildes umfassen, und die Steuer- und Auswerteeinrichtung kann vorzugsweise dazu ausgebildet sein, unter Verwendung des Bildes den Prüfbereich vorzugeben. Diese Ausführungsform eignet sich besonders für Fenster die in Bildern eines optischen Sensors gut erkennbar sind, beispielsweise Durchsichtsfenster. Unter optischer Strahlung wird dabei Strahlung im ultravioletten, sichtbaren oder infraroten Wellenlängenbereich verstanden. Der mit optischer Strahlung arbeitende Sensor braucht dabei nur in wenigstens einem vorgegebenen Wellenlängenbereich für optische Strahlung zu arbeiten. Diese Weiterbildung hat den Vorteil, daß die Lage des Wertdokuments nicht bekannt zu sein braucht

Die Mindestultraschalltransmission bzw. ein entsprechender Wert ist dabei so gewählt, daß sie für einen vorgegebenen Abschnitt eines Wertdokuments des vorgegebenen Typs charakteristisch ist, der außerhalb des Prüfbereichs liegt. Beispielsweise kann es sich hierbei um einen Abschnitt handeln, in dem keine die Ultraschalltransmission verändernden Sicherheitsmerkmale wie beispielsweise Wasserzeichen vorhanden sind. Als Mindestultraschalltransmission kann beispielsweise ein Mittelwert über die ortsabhängige Ultraschalltransmission in dem Abschnitt verwendet werden.

Die vorgegebene Anzahl wird vorzugsweise in Abhängigkeit von der Ausdehnung des Fensters bzw. dem Wertdokumenttyp und der örtlichen Auflösung des Ultraschallsensors bzw. der Ultraschalltransmissionsmessung gewählt. Vorzugsweise ist die Anzahl größer als 10.

Die gemessene Ultraschalltransmission ist dabei durch die Meßwerte in vorgegebener Weise festgelegt bzw. wird durch diese dargestellt. In entsprechender Weise entspricht der Mindestultraschalltransmission ein Schwellwert.

Das zur Prüfung verwendete Kriterium ist grundsätzlich beliebig, aber geeignet gewählt.

So kann das Kriterium darin bestehen, ob der jeweilige Meßwert größer als der Mindestultraschalltransmissionswert ist. Es ist aber auch möglich, statt des Meßwerts einen Funktionswert einer im relevanten Wertebereich monotonen, vorzugweise streng monotonen Funktion des Meßwertes für den Meßwert zu verwenden. Dann sieht das Kriterium einen Vergleich mit einem Funktionsschwellwert vor, der dem Wert der Funktion für den Schwellwert entspricht. Die Funktion braucht nicht monoton steigend zu sein, sie kann auch monoton fallend sein. In letzterem Fall wird dann geprüft, ob der Funktionswert für den jeweiligen Meßwert kleiner als der Funktionsschwellwert ist.

Weiter kann die Prüfung des Kriteriums für einen jeweiligen Ort eine Bildung eines Mittelwerts der Ultraschalltransmission für den Ort und der Ultraschalltransmissionen über wenigstens zwei, vorzugsweise wenigstens vier zu dem jeweiligen Ort unmittelbar benachbarte Orte umfassen. Insbesondere kann das Kriterium umfassen, daß die Ultraschalltransmission für einen Ort größer als die Mindestultraschalltransmission ist, wenn ein Mittelwert der Ultraschalltransmission über den jeweiligen Ort und wenigstens zwei unmittelbar benachbarte Orte, vorzugsweise wenigstens vier unmittelbar benachbarte Orte, größer als die Mindestultraschalltransmission ist.

Weiter kann das Kriterium vorzugsweise vorsehen, daß die Ultraschalltransmission um einen vorgegebenen Wert größer als die Mindestultraschalltransmission ist. Dieser Wert kann prinzipiell beliebig, aber geeignet gewählt werden. Vorzugsweise ist er in Abhängigkeit von dem Wertdokumenttyp und insbesondere der Art des Fensters und den Ultraschalltransmissionseigenschaften von Wertdokumenten des vorgegebenen Typs in dem vorgegebenen Abschnitt gewählt. Weiter kann er vorzugsweise so gewählt sein, daß zufällige Schwankungen bzw. Rauschen bei der Messung der Ultraschalltransmission das Ergebnis der Prüfung nur schwach oder besonders bevorzugt nicht beeinflussen.

Das Verfahren und insbesondere die Prüfung kann mittels der Steuer- und Auswerteeinrichtung durchgeführt werden, die dazu eine elektronische Schaltung oder vorzugsweise eine Datenverarbeitungseinrichtung, die beispielsweise einen FPGA und/oder einen Mikrocontroller und/oder einen Prozessor aufweisen kann, umfassen kann. Im Fall der Verwendung einer Datenverarbeitungseinrichtung, kann diese einen Prozessor oder Mikrocontroller und einen Speicher, in dem Instruktionen für ein Computerprogramm gespeichert sind, bei deren Ausführung durch den Prozessor bzw. Mikrokontroller das Verfahren unter Verwendung des Sensors durchgeführt wird, umfassen.

Wie bereits erwähnt kann die Mindestultraschalltransmission für einen Abschnitt wenigstens eines Wertdokuments ermittelt sein. Nach einer bevorzugten Ausführungsform kann die vorgegebene Mindestultraschalltransmission durch Untersuchungen von Referenzwertdokumenten des vorgegebenen Wertdokumenttyps ermittelt sein. Dies erlaubt eine schnelle und einfache Auswertung bei einer Prüfung.

Alternativ kann es aber auch bevorzugt sein, daß vor der Prüfung die vorgegebene Mindestultraschalltransmission unter Verwendung von für das Wertdokument erfaßten Meßwerten ermittelt wird. Insbesondere können Meßwerte für Orte in dem vorgegebenen Abschnitt des Wertdokuments verwendet werden. Diese Ausführungsform bietet den Vorteil, daß herstellungs- oder gebrauchsbedingte Schwankungen in den Ultraschalltransmissionseigenschaften der Wertdokumente die Prüfung weniger stark beeinflussen.

In beiden Fällen ist dann die Steuer- und Auswerteeinrichtung entsprechend ausgebildet.

Eine besonders sichere Prüfung ergibt sich, wenn bei der Prüfung ermittelt wird, ob die jeweilige Ultraschalltransmission innerhalb eines vorgegebenen Intervalls liegt, dessen untere Grenze größer als die vorgegebene Mindestultraschalltransmission ist. Dabei ist die untere Grenze so gewählt, daß die eine Ultraschalltransmission, die größer als die untere Grenze ist, nach dem vorgegebenen Kriterium größer als die Mindestultraschalltransmission ist. Um wieviel die untere Grenze größer als die Mindestultraschalltransmission ist, kann daher vorzugsweise in Abhängigkeit von dem

Kriterium gewählt werden. Die obere Grenze wird vorzugsweise so gewählt, daß bei der Messung auftretende Meßwerte, die bei Transmission durch ein Loch in dem Wertdokument oder in Abwesenheit eines Wertdokuments ermittelt würden, sicher außerhalb des Intervalls liegen. Besonders bevorzugt wird die obere Grenze in Abhängigkeit von den Ultraschalltransmissionseigenschaften des Fensters, beispielsweise für wenigstens ein vorgegebenes Referenzwertdokument des vorgegebenen Typs gewählt. Insbesondere kann die obere Grenze durch die in dem vorhergehenden Absatz genannte Höchsttransmission gegeben sein. Dann braucht keine separate Prüfung darauf durchgeführt zu werden, ob die Ultraschalltransmission die Höchsttransmission überschreitet.

Das Fenster des Wertdokuments kann selbst Schäden, beispielsweise Risse oder Löcher aufweisen. Es stellt sich daher auch die Aufgabe, ein Fenster eines Wertdokuments auf dessen Zustand, vorzugsweise mögliche Beschädigungen, hin zu prüfen. Vorzugsweise wird daher bei dem Verfahren geprüft, ob für Orte in dem Prüfbereich die Ultraschalltransmission größer als eine vorgegebene Höchsttransmission ist, die vorzugsweise größer ist als eine Ultraschalltransmission, die für Orte in einem Fensters eines unbeschädigten Wertdokuments des vorgegebenen Wertdokumenttyps charakteristisch ist. Ergibt die Prüfung, dass die Ultraschalltransmission für wenigstens einen der Orte die Höchsttransmission überschreitet, kann besonders bevorzugt ein Hinweissignal gebildet und abgegeben werden, das anzeigt, dass das Fenster beschädigt ist. Hierzu kann die Steuer- und Auswerteeinrichtung der Vorrichtung entsprechend ausgebildet sein. Die Höchsttransmission ist vorzugweise in Abhängigkeit von dem Wertdokumenttyp vorgegeben. Weiter ist sie vorzugsweise so gewählt, dass sie um einen vorgegebenen Faktor, der bevorzugt größer als 1,1 ist, größer ist als die maximale Ultraschalltransmission derjenigen Bereiche eines neuen Wertdokuments des vorgegebenen Wertdokumenttyps, die keine Löcher aufweisen. Auf diese Weise können Schäden an dem Fenster, beispielsweise Risse oder Löcher erkannt werden.

Prinzipiell genügt es bei dem Verfahren, daß bei der Prüfung nur das Vorhandensein der vorgegebenen Anzahl von Orten geprüft wird, für welche die Ultraschalltransmission nach dem Kriterium größer als die Mindestultraschall transmission ist. Es ist jedoch auch möglich, daß bei dem Verfahren bei der Prüfung auch die Verteilung der Orte in dem vorgegebenen Prüfbereich berücksichtigt wird, für die die Ultraschalltransmission größer als die Mindestultraschalltransmission ist. Bei der Vorrichtung ist dazu die Steuer- und Auswerteeinrichtung vorzugsweise so ausgebildet, daß bei der Prüfung auch die Verteilung der Orte in dem vorgegebenen Prüfbereich berücksichtigt wird, für die die Ultraschalltransmission größer als die Mindestultraschalltransmission ist. Vorzugsweise wird dazu geprüft, ob die Verteilung der Orte in dem vorgegebenen Prüfbereich, für die die Ultraschalltransmission größer als die Mindestultraschalltransmission ist, einem vorgegebenen Verteilungskriterium genügt. Die Prüfung kann dann nur dann als erfolgreich eingestuft werden, wenn die Verteilung einem vorgegebenen Verteilungskriterium genügt. Vorzugsweise wird das Signal dann so gebildet, daß es einen Hinweis auf die Echtheit des Wertdokuments nur dann darstellt, wenn die Verteilung dem vorgegebenen Verteilungskriterium genügt, bzw. daß es einen Hinweis auf das Vorliegen einer Fälschung immer dann darstellt, wenn die Verteilung dem vorgegebenen Verteilungskriterium nicht genügt. Die vorgegebene Anzahl muß dann zusätzlich erreicht werden. Die Verteilung kann insbesondere durch die Form des Fensters oder ein Muster in dem Fenster bestimmt sein.

Weiter kann bei dem Verfahren zusätzlich das weitere Kriterium geprüft werden, ob die Orte, die der vorgegebenen Anzahl von Ultraschalltransmissionen entsprechen, ein zusammenhängendes Gebilde bilden. Vorzugsweise wird das Signal dann so gebildet, daß es einen Hinweis auf die Echtheit des Wertdokuments nur dann darstellt, wenn das weitere Kriterium erfüllt ist, bzw. daß es einen Hinweis auf das Vorliegen einer Fälschung immer dann darstellt, wenn das weitere Kriterium nicht erfüllt ist. Bei der Vorrichtung kann dann die Steuer- und Auswerteeinrichtung entsprechend ausgebildet sein.

Alternativ kann bei dem Verfahren zusätzlich das weitere Kriterium geprüft werden, ob die Orte, für die die Ultraschalltransmission größer als die Mindestultraschalltransmission ist und/oder für die die Ultraschalltransmission innerhalb des vorgegebenen Intervalls liegt, ein zusammenhängendes Gebilde bilden. Vorzugsweise wird das Signal dann so gebildet, daß es einen Hinweis auf die Echtheit des Wertdokuments nur dann darstellt, wenn das weitere Kriterium erfüllt ist, bzw. daß es einen Hinweis auf das Vorliegen einer Fälschung immer dann darstellt, wenn das weitere Kriterium nicht erfüllt ist Bei der Vorrichtung kann dann die Steuer- und Auswerteeinrichtung entsprechend ausgebildet sein.

Wird bei dem Verfahren auch geprüft, ob Orte vorhanden sind, für die Ultraschalltransmission oberhalb der Höchsttransmission liegt, kann vorzugsweise auch zusätzlich geprüft werden, ob mehrere Orte, für die die Ultraschalltransmission größer als die Höchsttransmission ist, ein zusammenhängendes Gebilde bilden. Vorzugsweise wird das Signal dann so gebildet, daß es einen Hinweis auf einen unbeschädigten Zustand des Fensters des Wertdokuments nur dann darstellt, wenn das weitere Kriterium erfüllt ist, bzw. daß es einen Hinweis auf einen beschädigten Zustand des Fensters des Wertdokuments immer dann darstellt, wenn das weitere Kriterium nicht erfüllt ist. Bei der Vorrichtung kann dann die Steuer- und Auswerteeinrichtung entsprechend ausgebildet sein.

Unter einem Fenster wird im Rahmen der vorliegenden Erfindung ein Merkmal eines Wertdokuments verstanden, das ein Loch in einem Substrat des Wertdokuments und wenigstens eine das Loch abdeckende Folie umfaßt oder das durch einen Bereich eines Wertdokuments mit einem Polymersubstrat gegeben ist, der keine opazifizierende Schicht aufweist. Unter dem Substrat wird dabei insbesondere die als Träger fungierende, vorzugsweise dickste Schicht des Wertdokuments verstanden.

Im ersten Fall kann bei dem Verfahren das Fenster insbesondere ein Fenster sein, das ein Loch in einem Papier- oder Hybridsubstrat des Wertdokuments und wenigstens eine das Loch abdeckende Folie umfaßt oder durch das Loch und die Folie gebildet ist.

Im zweiten Fall kann bei dem Verfahren das Fenster durch einen Bereich eines Wertdokuments mit einem Polymersubstrat gegeben ist, der keine opazifizierende Schicht trägt. Unter einer opazifizierenden Schicht wird neben einer mit einem Beschichtungsverfahren, vorzugsweise einem drucktechnischen Verfahren aufgebrachten Schicht auch eine Schicht aus Banknotenpapier verstanden.

Das Fenster hat vorzugsweise einen Flächeninhalt der größer als 4 mm², besonders bevorzugt größer als 16 mm². Dies erlaubt zum einen eine sichere Erkennung und zum anderen ein interessantes Design des Wertdokuments.

Die abdeckende Folie oder der Bereich ohne opazifizierende Schicht kann transparent sein, aber auch optisch wirksame Strukturen, beispielsweise Prägungen oder Hologramme, aufweisen.

Gegenstand der Erfindung ist auch eine Vorrichtung zur Bearbeitung von Wertdokumenten mit einer Zuführeinrichtung zum Zuführen vereinzelter Wertdokumente, einer Ausgabeeinrichtung zur Aufnahme bearbeiteter Wertdokumente, einer Transporteinrichtung zum Transportieren von der Zuführeinrichtung zugeführter, vereinzelter Wertdokumente entlang eines Transportpfades von der Zuführeinrichtung zu der Ausgabeeinrichtung, und einer erfindungsgemäßen Untersuchungsvorrichtung, bei der der Transportpfad durch den Ultraschalltransmissionssensor verläuft, wobei die Bearbeitungsvorrichtung dazu ausgebildet ist, die Wertdokumente in Abhängigkeit von Signalen der Untersuchungsvorrichtung zu bearbeiten, vorzugsweise zu sortieren.

Die Erfindung wird im Folgenden noch weiter beispielhaft an Hand der Zeichnungen erläutert. Es zeigen:
- Fig. 1: eine schematische Darstellung einer Banknotenbearbeitungsvorrichtung,
- Fig. 2: eine schematische Darstellung eines Ultraschallsensors der Banknotenbearbeitungsvorrichtung in Fig. 5 mit einer Steuer- und Auswerteeinrichtung in einer Ansicht entlang einer Transportrichtung von Wertdokumenten,
- Fig. 3: eine schematische Darstellung von Ultraschallsendern des Ultraschallsensors in Fig. 3 in einer Ebene parallel zur Ebene einem zu untersuchenden Wertdokument,
- Fig. 4: eine schematische teilweise Darstellung eines Wertdokuments mit durch die Ultraschallsender des Ultraschallsensors in Fig. 3 beschallten Flecken bzw. Abtastbereichen,
- Fig. 5: eine schematische Darstellung eines Wertdokuments mit Orten bzw. Abtastbereichen, für die Transmissionswerte mittels des Ultraschallsensors in Fig. 3 ermittelt wurden,
- Fig. 6: eine schematische Darstellung eines Wertdokuments in Form einer Banknote mit einem Banknotenpapiersubstrat und einem Fenster,
- Fig. 7: einen Querschnitt durch das Wertdokument der Fig. 1 entlang der Linie I-I,
- Fig. 8: eine schematische Darstellung eines Wertdokuments in Form einer Banknote mit einem Polymersubstrat und einem Fenster,
- Fig. 9: einen Querschnitt durch das Wertdokument der Fig. 1 entlang der Linie I-I,
- Fig. 10: ein vereinfachtes Ablaufdiagramm für ein Verfahren zur Untersuchung eines Wertdokuments mittels des Ultraschallsensors und der Steuer- und Auswerteeinrichtung in Fig. 6 nach einer bevorzugten Ausführungsform der Erfindung,
- Fig. 11: eine schematische Darstellung des Verlauf der Ultraschalltransmission für eine Spur entlang eines Wertdokuments mit einem Fenster, das teilweise von der Spur abgedeckt wird,
- Fig. 12: ein vereinfachtes Ablaufdiagramm für ein Verfahren zur Untersuchung eines Wertdokuments mittels des Ultraschallsensors und der Steuer- und Auswerteeinrichtung in Fig. 6 nach einer weiteren bevorzugten Ausführungsform,
- Fig. 13: ein vereinfachtes Ablaufdiagramm für ein Verfahren zur Untersuchung eines Wertdokuments mittels des Ultraschallsensors und der Steuer- und Auswerteeinrichtung in Fig. 6 nach noch einer weiteren bevorzugten Ausführungsform,
- Fig. 14: eine schematische Darstellung zur Veranschaulichung der Erzeugung eines Prüfbereichs aus einem Fenster in einem digitalen Bild eines Wertdokuments,
- Fig. 15: ein vereinfachtes Ablaufdiagramm für ein Verfahren zur Untersuchung eines Wertdokuments mittels des Ultraschallsensors und der Steuer- und Auswerteeinrichtung in Fig. 6 nach noch einer weiteren bevorzugten Ausführungsform, und
- Fig. 16: eine schematische Darstellung des Verlaufs der Ultraschalltransmission für eine Spur entlang eines Wertdokuments mit einem Fenster, das teilweise von der Spur abgedeckt wird und einen die Spur kreuzenden Riss aufweist.

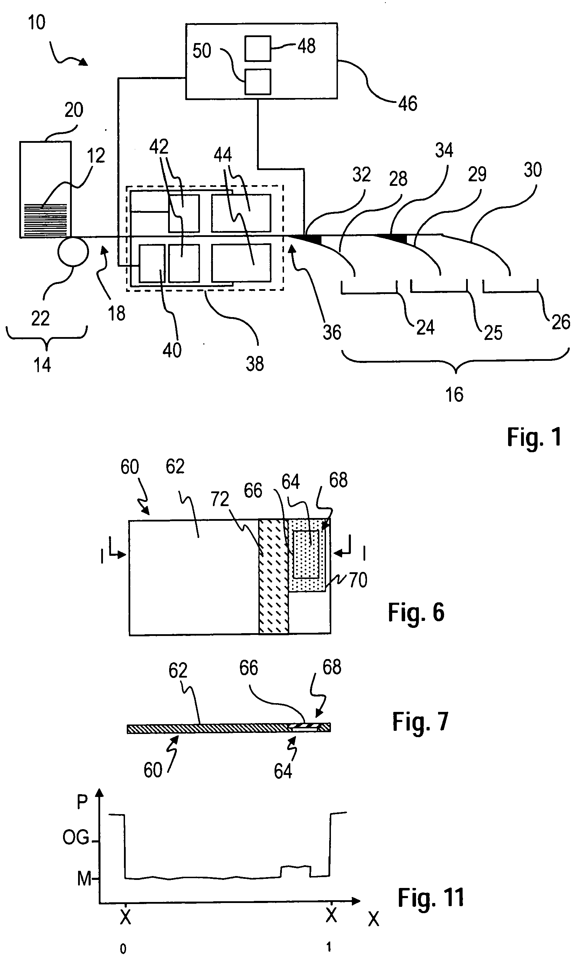

Eine Wertdokumentbearbeitungsvorrichtung 10 in Fig. 1, im Beispiel eine Vorrichtung zur Bearbeitung von Wertdokumenten 12 in Form von Banknoten, ist zur Sortierung von Wertdokumenten in Abhängigkeit von der Erkennung der Echtheit von bearbeiteten Wertdokumenten ausgebildet.

Sie verfügt über eine Zuführeinrichtung 14 zur Zuführung von Wertdokumenten, eine Ausgabeeinrichtung 16 zur Aufnahme bearbeiteter, d. h. sortierter Wertdokumente, und eine Transporteinrichtung 18 zum Transportieren von vereinzelten Wertdokumenten von der Zuführeinrichtung 14 zu der Ausgabeeinrichtung 16.

Die Zuführeinrichtung 14 umfaßt im Beispiel ein Eingabefach 20 für einen Wertdokumentstapel und einen Vereinzeler 22 zur Vereinzelung von Wertdokumenten aus dem Wertdokumentstapel in dem Eingabefach 20.

Die Ausgabeeinrichtung 16 umfaßt im Beispiel drei Ausgabeabschnitte 24, 25 und 26, in die bearbeitete Wertdokumente je nach dem Ergebnis der Bearbeitung sortiert werden können. Im Beispiel umfaßt jeder der Abschnitte ein Stapelfach und ein nicht gezeigtes Stapelrad, mittels dessen zugeführte Wertdokumente in dem Stapelfach abgelegt werden können.

Die Transporteinrichtung 18 verfügt über wenigstens zwei, im Beispiel drei Zweige 28, 29 und 30, an deren Enden jeweils einer der Ausgabeabschnitte 24 bzw. 25 bzw. 26 angeordnet ist, und an den Verzweigungen über durch Stellsignale steuerbare Weichen 32 und 34, mittels derer Wertdokumente in Abhängigkeit von Stellsignalen den Zweigen 28 bis 30 und damit den Ausgabeabschnitten 24 bis 26 zuführbar sind.

An einem durch die Transporteinrichtung 18 definierten Transportpfad 36 zwischen der Zuführeinrichtung 14, im Beispiel genauer dem Vereinzeler 22, und der in Transportrichtung ersten Weiche 32 nach dem Vereinzeler 22 ist eine Sensoreinrichtung 38 angeordnet, die während des Vorbeitransports von Wertdokumenten physikalische Eigenschaften der Wertdokumente mißt und die Meßergebnisse wiedergebende Sensorsignale bildet. In diesem Beispiel verfügt die Sensoreinrichtung 38 über drei Sensoren, nämlich einen optischen Remissionssensor 40, der ein Remissionsfarbbild des Wertdokuments erfaßt, einen optischen Transmissionssensor 42, der ein Transmissionsbild des Wertdokuments erfaßt, und einen Transmissionsultraschallsensor 44, der ortsaufgelöst Ultraschalltransmissionseigenschaften des Wertdokuments erfaßt bzw. mißt.

Eine Steuer- und Auswerteeinrichtung 46 ist über Signalverbindungen mit der Sensoreinrichtung 38 und der Transporteinrichtung 18, insbesondere den Weichen 32 und 34, verbunden. In Verbindung mit der Sensoreinrichtung 38 klassifiziert sie in Abhängigkeit von den Sensorsignalen der Sensoreinrichtung 38 für ein Wertdokument in eine von vorgegebenen Echtheitsklassen und steuert durch Abgabe von Stellsignalen die Transporteinrichtung 18, hier genauer die Weichen 32 bzw. 34 so an, daß das Wertdokument entsprechend seiner bei der Klassifizierung ermittelten Klasse in einen der Klasse zugeordneten Ausgabeabschnitt der Ausgabeeinrichtung 16 ausgegeben wird. Die Zuordnung zu einer der vorgegebenen Echtheitsklassen bzw. die Klassifizierung erfolgt dabei in Abhängigkeit von wenigstens einem vorgegebenen Echtheitskriterium. Als Echtheitsklassen sind Klassen für als echt erkannte Wertdokumente, als gefälscht erkannte Wertdokumente und Wertdokumente, für die ein Fälschungsverdacht ermittelt wurde, vorgesehen.

Die Steuer- und Auswerteeinrichtung 46 verfügt dazu insbesondere neben entsprechenden Schnittstellen für die Sensoreinrichtung 38 bzw. deren Sensoren über einen Prozessor 48 und einen mit dem Prozessor 48 verbundenen Speicher 50, in dem wenigstens ein Computerprogramm mit Programmcode gespeichert ist, bei dessen Ausführung der Prozessor 48 die Vorrichtung steuert bzw. die Sensorsignale, insbesondere zur Ermittlung einer Echtheitsklasse eines bearbeiteten Wertdokuments, auswertet und entsprechend der Auswertung die Transporteinrichtung 18 ansteuert.

Genauer erfassen die Sensoren während des Vorbeitransports des Wertdokuments entsprechend ihrer Funktion Abtastbereichseigenschaften von durch die Relativlage der Sensoren zu der Banknote bestimmten Abtastbereichen auf der Banknote, wobei die entsprechenden Sensorsignale gebildet werden. Jeder der Sensoren kann dabei eine andere räumliche Auflösung aufweisen, d.h. die Größe und Verteilung der erfaßten Abtastbereiche auf der Banknote kann in Abhängigkeit von dem jeweiligen Sensor und der verwendeten Transportgeschwindigkeit variieren. Jedem der Abtastbereiche ist dabei ein Ort zugeordnet, der die Lage der Abtastbereiche für den jeweiligen Sensor zueinander und/oder relativ zu der Banknote wiedergibt.

Die Steuer- und Auswerteeinrichtung 46 ermittelt dann aus den analogen oder digitalen Sensorsignalen der Sensoren der Sensoreinrichtung 38 bei einer Sensorsignalauswertung wenigstens eine Abtastbereichseigenschaft und/oder wenigstens eine Wertdokumenteigenschaft, die für die Überprüfung der Banknoten in Bezug auf deren Echtheit relevant ist. Vorzugsweise werden mehrere dieser Eigenschaften ermittelt. In diesem Beispiel werden als optische Abtasteigenschaften ein Transmissionsbild und ein Remissions-bild und als akustische Eigenschaft die Ultraschalltransmission der Abtastbereiche ermittelt.

In Abhängigkeit von den Abtastbereichseigenschaften ermittelt die Steuer- und Auswerteeinrichtung 46 für die verschiedenen Sensoren jeweils Echtheitssignale, die darstellen, ob die ermittelten Abtastbereichs- bzw. Wertdokumenteigenschaften einen Hinweis auf die Echtheit des Wertdokuments darstellen oder nicht. In Folge dieser Signale können entsprechende Daten in der Steuer- und Auswerteeinrichtung 46, beispielsweise dem Speicher 50, zur späteren Verwendung gespeichert werden. In Abhängigkeit von den Echtheitssignalen ermittelt die Steuer- und Auswerteeinrichtung 46 dann ein Gesamtergebnis für die Echtheitsprüfung gemäß einem vorgegebenen Gesamtkriterium und bildet in Abhängigkeit von dem Ergebnis das Steuersignal für die Transporteinrichtung 18.

Zur Bearbeitung von Wertdokumenten 12 werden in das Eingabefach 20 als Stapel oder einzeln eingelegte Wertdokumente 12 von dem Vereinzeler 22 vereinzelt und vereinzelt der Transporteinrichtung 18 zugeführt, die die vereinzelten Wertdokumente 12 an der Sensoreinrichtung 38 vorbeitransportiert. Diese erfaßt die Eigenschaften der Wertdokumente 12, wobei Sensorsignale gebildet werden, die die Eigenschaften des jeweiligen Wertdokuments wiedergeben. Die Steuer- und Auswerteeinrichtung 46 erfaßt die Sensorsignale, ermittelt in Abhängigkeit von diesen eine Echtheitsklasse des jeweiligen Wertdokuments und steuert in Abhängigkeit von dem Ergebnis die Weichen so an, daß die Wertdokumente entsprechend der ermittelten Echtheitsklasse in einen der jeweiligen Echtheitsklasse zugeordneten Ausgabeabschnitt transportiert wird.

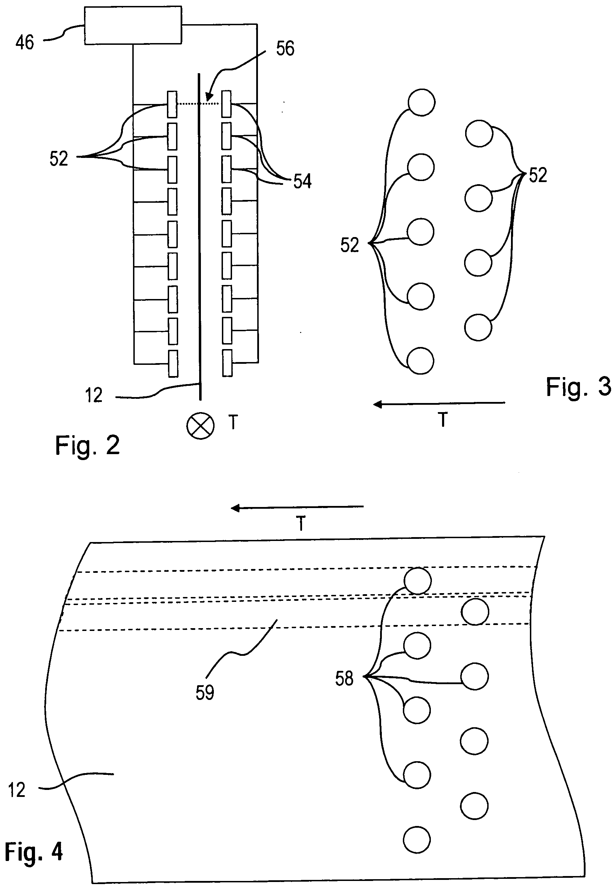

Zur Ermittlung einer Echtheitsklasse auf der Basis von Ultraschalleigenschaften dient der Transmissionsultraschallsensor 44, der im Beispiel folgender maßen aufgebaut ist (vgl. Fig. 2 und 3).

Der Sensor 44 verfügt über mehrere, sowohl quer zu einer Transportrichtung T der Wertdokumente 12 als auch längs zu dieser im wesentlichen in einer Ebene parallel zu einer entlang des Transportpfads 36 des transportierten Wertdokuments 12 angeordnete, von der Steuer- und Auswerteeinrichtung 46 angesteuerte Ultraschallwandler 52 zur Abgabe von Ultraschallpulsen auf die Banknote. Diese Ultraschallwandler 52 dienen somit als Ultraschallsender.

Den Ultraschallwandlern bzw. -sendern 52 in Bezug auf den Transportpfad 36 gegenüber sind in gleicher Zahl als Ultraschallempfänger dienende Ultraschallwandler 54, die mit der Steuer- und Auswerteeinrichtung 46 über in den Figuren nicht gezeigte Schnittstellen und schematisch gezeigte Signalverbindungen so angeordnet, daß diese von einem entlang des Transportpfads 36 transportierten Wertdokument 12 ausgehenden, durch Beschallung mit Ultraschallpulsen der Ultraschallsender 52 hervorgerufene Ultraschallwellen empfangen können.

Jedem der Ultraschallsender 52 ist dabei einer der Ultraschallempfänger 54 so zugeordnet, daß zwischen diesen eine wenigstens näherungsweise orthogonal zu einem entlang des Transportpfads 36 transportierten Wertdokument 12 verlaufende Ultraschallstrecke 56 ergibt, entlang derer ein von dem jeweiligen Ultraschallsender 52 abgegebener Ultraschallpuls zu dem diesem zugeordneten Ultraschallempfänger 54 läuft. Mit jedem Paar von Ultraschallsendern und diesen zugeordneten Ultraschallempfängern bzw. mit jeder Ultraschallstrecke 56 in Verbindung mit der Steuer- und Auswerteeinrichtung 46 ist damit ein Wert für die Ultraschalltransmission des Wertdokuments 12 an dem mit dem Ultraschall beschallten Ort ermittelbar.

Die Ultraschallwandler 52 bzw. 54 sind so ausgebildet, daß sie zur Abgabe bzw. zum Empfang von Ultraschallpulsen mit einer Dauer im Bereich von im Beispiel etwa 30 µs und einer Ultraschallfrequenz, d.h. einem Frequenzmaximum des Spektrums des Ultraschallpulses, von im Beispiel etwa 400 kHz gut geeignet sind. Weiter sind sie so dimensioniert, daß jeweils ein auf einem entlang des Transportpfads 36 transportierten Wertdokument 12 bei Beschallung mit den Ultraschallpulsen beschallter Fleck 58, d.h. Abtastbereich, einen Durchmesser von etwa 2 mm aufweist. Jedem der Abtastbereiche ist als Ort der Mittelpunkt des Abtastbereiches zugeordnet.

Die Ultraschallsender und -empfänger 52 bzw. 54 sind in einer zu dem Wertdokument 12 in dein Transportpfad 36 parallelen Ebene so angeordnet, daß Werte für die Ultraschalltransmission für sich parallel zu der Transportrichtung T erstreckende streifenförmige Erfassungsbereiche 59 erfaßbar sind, wie in Fig. 4 für eine Momentaufnahme während der Erfassung dargestellt

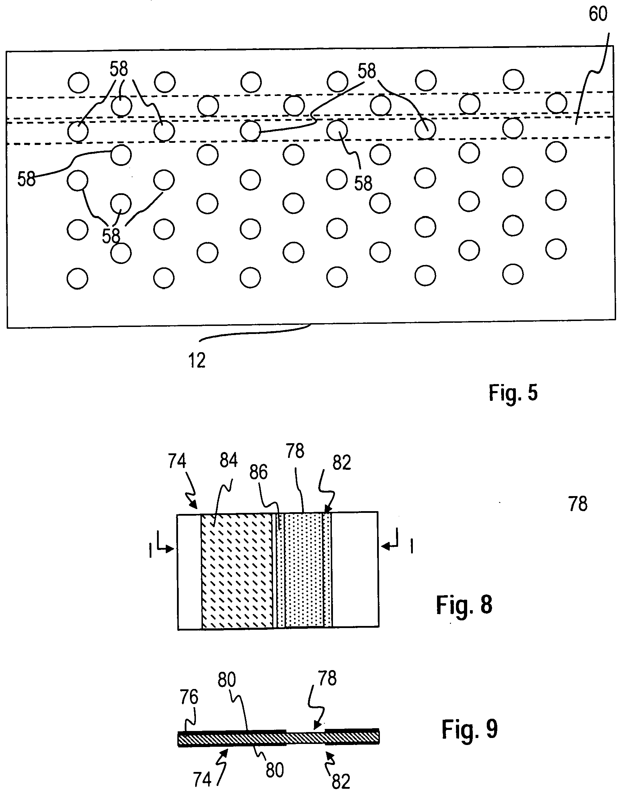

Insgesamt kann sich damit eine für ein Wertdokument 12 schematisch in Fig. 4 und insbesondere Fig. 5 dargestellte Verteilung von Abtastbereichen 58 bzw. Orten ergeben, für die Meßwerte für die Ultraschalltransmission, im Folgenden auch als Transmissionswerte bezeichnet, erfaßbar sind, wenn das Wertdokument 12 mit konstanter geeignet vorgegebener Geschwindigkeit durch die Ultraschallstrecken 56 transportiert wird und während des Transports in vorgegebenen Zeitabständen Transmissionswerte erfaßt werden. In diesem Ausführungsbeispiel erfolgt die Ansteuerung unabhängig von dem Eintritt eines Wertdokuments 12 in den Erfassungsbereich des Transmissionsultraschallsensors 44. Zur Unterdrückung eines unerwünschten Empfangs von Ultraschallpulsechos kann der jeweilige Ultraschallempfänger für eine Ultraschallstrecke gegenüber dem Zeitpunkt der Abgabe des Ultraschallpulses durch den Ultraschallsender für die Ultraschallstrecke um etwas weniger als die Pulslaufzeit für die Ultraschallstrecke verzögert eingeschaltet und vor der doppelten Pulslaufzeit seit der Abgabe wieder abgeschaltet werden.

Es ergibt sich so eine regelmäßige Anordnung der Abtastbereiche 58 bzw. Orte auf dem Wertdokument 12, im Beispiel eine im Wesentlichen hexagonale Anordnung. Die Anordnung der Ultraschallsender und -empfänger 52 bzw. 54 ist so gewählt, daß der Abstand aufeinander folgender Orte in wenigstens einem der Streifen bzw. Erfassungsbereiche 59 kleiner als 1 cm, vorzugsweise kleiner als 5 mm ist. Im Beispiel beträgt der Abstand nächstbenachbarter Orte etwa 3 mm, vorzugsweise 2 mm.

Der Sensor 44 verfügt im Ausführungsbeispiel insbesondere über vierundzwanzig Ultraschallsender /-empfänger-Paare bzw. Ultraschallstrecken 56, die so angeordnet sind, daß die Erfassungsbereiche 59 bzw. die Spuren einen Abstand zwischen 3 und 4 mm aufweisen.

Zur Erfassung der Transmissionswerte, d. h. der Transmission, erfaßt die Steuer- und Auswerteeinrichtung 46 in konstanten Zeitabständen die Sensorsignale der Ultraschallempfänger 54, die die Intensität bzw. Leistung einzelner empfangender Ultraschallpulse als Funktion der Zeit und damit wegen der konstanten Transportgeschwindigkeit auch des Ortes wiedergeben. Anhand dieser Signale ermittelt die Steuer- und Auswerteeinrichtung 46 auch das Eintreten eines Wertdokuments in den Erfassungsbereich des Sensors 44. Die Transmissionswerte sind dabei unter der Annahme einer grundsätzlich konstanten Sendeleistung der Ultraschallsender 52 einfach durch die empfangenen Ultraschallpulsenergien gegeben. In anderen Ausführungsbeispielen ist es jedoch auch möglich, die empfangenen Ultraschallpulsenergien durch eine vorgegebene oder gemessene Ultraschallpulsenergie gesendeter Pulse zu dividieren und damit normierte Transmissionswerte zu erhalten.

Die ermittelten Transmissionswerte werden den Orten, für die sie erfaßt wurden, zugeordnet gespeichert. Dies kann beispielsweise in der Art erfolgen, daß für jeden der Erfassungsbereiche 59 getrennt die Transmissionswerte in der zeitlichen Reihenfolge ihrer Erfassung in dem Speicher 50 gespeichert werden. Der Erfassungsbereich 59 entspricht dann einer Koordinate in einer Richtung quer zur Transportrichtung und die Stellung in der Reihe entlang des Erfassungsbereichs 59 einer Koordinate in Transportrichtung T. Ein Index, der die Stellung in der Reihe angibt, stellt dann zusammen mit der Vorschrift für die Umsetzung von Orten in die Reihe die Ortsinformation dar.

Die Frequenz, mit der die Ultraschallpulse nacheinander abgegeben werden, und die Transportgeschwindigkeit der Banknote sind so gewählt, daß entlang der Transportrichtung der Banknote in jedem Erfassungsbereich 59 wenigstens fünf Transmissionswerte erfaßt werden. Im Beispiel werden Transmissionswerte im Abstand von 3 mm, vorzugsweise 2 mm, entlang der Transportrichtung oder fünfzig oder mehr Transmissionswerte erfaßt.

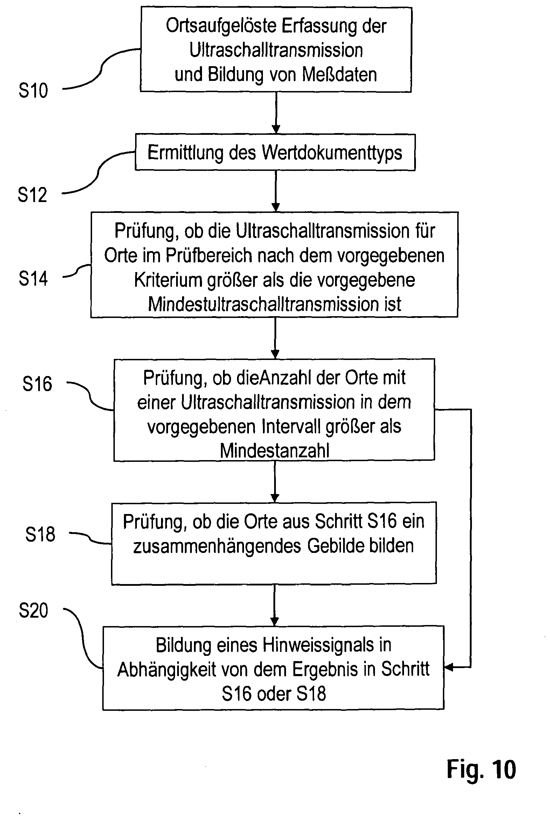

Ausgehend von diesen für ein Wertdokument als Funktion des Ortes vorliegenden Transmissionswerten führt die Steuer- und Auswerteeinrichtung 46, genauer der Prozessor 48 nun bei der Abarbeitung von Programmcode des in dem Speicher 50 gespeicherten Computerprogramms folgendes Verfahren zur Ermittlung der Echtheit des Wertdokuments aus. Der erste Schritt S10 wird allerdings teilweise durch den Ultraschallsensor 44 durchgeführt. Das Verfahren ist grob schematisch in Fig. 10 als Ablaufdiagramm veranschaulicht.

Bei dem geschilderten Ausführungsbeispiel wird als vorgegebener Wertdokumenttyp von Wertdokumenten der in Fig. 6 und 7 gezeigte Typ von Banknote verwendet

Die Banknote 60 umfaßt ein Substrat 62 aus Banknotenpapier, das an einer vorgegebenen Stelle ein rechteckiges Loch 64 vorgegebener Größe, im Beispiel von etwa 50 mm² Flächeninhalt, aufweist. Auf das Substrat 62 ist im Bereich des Lochs 64 ein Folienelement 66 aus einem polymeren Material aufgebracht, dessen Flächengewicht wenigstens 10% geringer als das des Substrats 62 in der Umgebung des Lochs 64 ist und das das Loch 64 vollständig abdeckt. Das abgedeckte Loch 64 und das Folienelement 66 bilden ein Fenster 68.

Bei dem Verfahren wird zum einen ein Prüfbereich 70 verwendet, der für den Wertdokumenttyp so vorgegeben ist, daß auch im Rahmen üblicher Herstellungsschwankungen das Fenster 68 innerhalb des Prüfbereichs 70 liegt. Weiter wird bei dem Verfahren eine Mindestultraschalltransmission verwendet, die für einen vorgegebenen außerhalb des Prüfbereichs liegenden Abschnitt wenigstens eines Wertdokuments des vorgegebenen Wertdokumenttyps charakteristisch ist und die im vorliegenden Beispiel durch arithmetische Mittelung der Ultraschalltransmission für Orte in einem vorgegebenen Bereich 72 einiger Referenzwertdokumente des vorgegebenen Wertdokumenttyps erhalten wird. Dieser Bereich 72 liegt außerhalb des Prüfbereichs 70, in dem das Fenster 68 liegt und ist vorzugsweise so gewählt, daß er eine im wesentlichen ortsunabhängige Ultraschalltransmission aufweist, die vorzugsweise der Ultraschalltransmission in der Nachbarschaft des Fensters 68 entspricht.

Weiter wird bei dem Verfahren ein Intervall verwendet, in dem die Ultraschalltransmission bzw. der Ultraschalltransmissionswert für Orte in dem Fenster 68 liegen müssen. Die untere Grenze wird in Abhängigkeit von dem Kriterium dafür gewählt, daß eine Ultraschalltransmission größer als die Mindestultraschalltransmission ist. Im Beispiel ist die untere Grenze etwa 5% größer als die Mindestultraschalltransmission. Die obere Grenze ist kleiner als eine Ultraschalltransmission, die bei Abwesenheit eines Wertdokuments erfaßt würde. Im vorliegenden Beispiel ist sie so gewählt, daß sie dem arithmetischen Mittelwert aus der Ultraschalltransmission in Abwesenheit eines Wertdokuments und einem Mittelwert über die Referenzwertdokumente für die Ultraschalltransmission für einen Ort in dem Fenster 68 entspricht. Diese Werte sind dem Wertdokumenttyp zugeordnet gespeichert.

In Schritt S10 werden mittels des Ultraschallsensors und der Steuer- und Auswerteeinrichtung ortsaufgelöst Meßwerte für die Ultraschalltransmission von Ultraschall des Ultraschallsensors durch das Wertdokument ermittelt.

In Schritt S12 ermittelt die Steuer- und Auswerteeinrichtung 30, ob das Wertdokument einen vorgegebenen Wertdokumenttyp hat. Ist dies der Fall, wird der Wertdokumenttyp zur weiteren Verwendung gespeichert Andernfalls erfolgt eine Fehlermeldung, auf die hin das Verfahren abgebrochen wird. Zur Ermittlung des Wertdokumenttyps können beispielsweise die Daten eines der optischen Sensoren verwendet werden. Verfahren hierzu sind dem Fachmann bekannt. Weiter wird die Lage des Wertdokuments ermittelt.

In den Schritten S14 und S16 prüft die Steuer- und Auswerteeinrichtung 30 unter Verwendung der Meßwerte bzw. Transmissionswerte, ob für eine vorgegebene Anzahl von Orten in dem für den Wertdokument vorgegebenen Prüfbereich 70 die Ultraschalltransmission nach dem vorgegebenen Kriterium größer ist als eine vorgegebene Mindestultraschalltransmission, die für den vorgegebenen außerhalb des Prüfbereichs 70 liegenden Abschnitt 72 eines Wertdokuments des vorgegebenen Wertdokumenttyps charakteristisch ist.

In Schritt S14 werden dazu die Transmissionswerte für Orte in dem Prüfbereich 70, daraufhin überprüft, ob die Transmissionswerte nach dem vorgegebenen Kriterium größer als die vorgegebene Mindestultraschalltransmission bzw. ein entsprechender Wert sind. Dazu wird im vorliegenden Beispiel zunächst in Abhängigkeit von dem Wertdokumenttyp und der erkannten Lage der Prüfbereich vorgegeben. Dies erfolgt im vorliegenden Beispiel zum einen dadurch, daß für die zu prüfenden Orte jeweils ein arithmetischer Mittelwert der Ultraschalltransmission über den jeweiligen Ort und die über im Beispiel sechs unmittelbar benachbarte Orte gebildet und als Ultraschalltransmission für den jeweiligen Ort verwendet wird. Zum anderen wird geprüft, ob die so gebildeten Mittelwerte bzw. Ultraschalltransmissionen in dem für Wertdokumente des vorgegebenen Typs vorgegebenen Intervall liegen. Das Ergebnis der Prüfung wird für jeden Ort gespeichert.

In Schritt S16 wird geprüft, ob die Anzahl der Transmissionswerte für Orte in dem Prüfbereich 70, die innerhalb des Intervalls liegen, größer als die vorgegebene Anzahl ist Die Anzahl der Transmissionswerte ist in Abhängigkeit von dem Typ des Wertdokuments, insbesondere der Fläche des Fenster und der Ortsauflösung des Ultraschallsensors vorgegeben, und ist als Mindestanzahl aufzufassen. Zur Prüfung wird die Anzahl der in Schritt S14 ermittelten Transmissionswerte, die in dem Intervall liegen, ermittelt und mit der Mindestanzahl verglichen. Das Ergebnis des Vergleichs wird gespeichert.

In diesem Ausführungsbeispiel wird im Schritt S18 zusätzlich geprüft, ob die Orte, die der vorgegebenen Anzahl von Transmissionswerten entsprechen, ein zusammenhängendes Gebilde bilden. Dazu werden die den Transmissionswerten, die innerhalb des Intervalls liegen, entsprechenden Orte ermittelt. Danach wird geprüft, ob es unter diesen Orten eine Gruppe mit wenigstens der Mindestanzahl gibt, die einen zusammenhängenden Bereich bilden, d. h. ob zu jedem der Orte der jeweiligen Gruppe wenigstens ein weiterer der Orte der Gruppe unmittelbar benachbart ist.

Ergeben die Prüfungen in den Schritten S16, daß die vorgegebene Anzahl erreicht wurde, und S18, daß die Orte, die Transmissionswerten in dem Intervall zugeordnet sind, einen zusammenhängenden Bereich bilden, bildet die Steuer- und Auswerteeinrichtung 30 in Schritt S20 ein Signal, das einen Hinweis auf die Echtheit des Sicherheitsmerkmals bzw. des Wertdokuments darstellt.

Andernfalls bildet die Steuer- und Auswerteeinrichtung 30 ein Signal, das einen Hinweis auf das Vorliegen einer Fälschung des Wertdokuments darstellt.

Das Signal führt zur Speicherung eines entsprechenden Echtheitshinweiswertes z. b. in dem Speicher der Steuer- und Auswerteeinrichtung.

Das Signal bzw. der Echtheitshinweiswert wird wie oben beschrieben mit entsprechenden Signalen bzw. Echtheitshinweiswerten für die anderen Sensoren zur Ermittlung der Echtheit des Wertdokuments herangezogen.

In Fig. 11 ist zur Veranschaulichung schematisch in beliebigen Einheiten der Pegel P für die Ultraschalltransmission als Funktion einer Koordinate X auf dem Wertdokument für eine Spur entlang der Linie I-I in Fig. 6 gezeigt. Die Figuren 6, 7 und 11 sind so angeordnet und skaliert, daß sich jeweils in den Figuren untereinander liegende Orte entlang der Linie I-I entsprechen. Das Wertdokument beginnt bei der Koordinate X₀ und reicht bis zur Koordinate X₁. Links von X₀ und rechts von X₁ wird ein Pegel erreicht, der bei Empfang eines ungeschwächten Ultraschallsignals, d.h. bei Abwesenheit des Wertdokuments, erhalten wird. Im Bereich des Fensters 68 ist der Pegel gegenüber dem Pegel für den Rest des Wertdokuments erhöht. Weiter ist die Mindestultraschalltransmission M gezeigt, und die obere Grenze des Intervalls OG. Die untere Grenze ist nicht eingezeichnet, da sie sich zu gering von M unterscheidet

Ein zweites Ausführungsbeispiel unterscheidet sich von dem geschilderten ersten Ausführungsbeispiel dadurch, daß in einem Schritt S13 zwischen dem unveränderten Schritt S10 und einem den Schritt S14 ersetzenden Schritt S14' die vorgegebene Mindestultraschalltransmission auf der Basis der erfaßten Transmissionswerte für das Wertdokument und daraus die untere Grenze des Intervalls ermittelt wird. Der Schritt S13 kann vor oder nach Schritt S12 durchgeführt werden. Dazu ermittelt die Steuer- und Auswerteeinrichtung 30 einen arithmetischen Mittelwert über die für Orte in dem Abschnitt 72 erfaßten Transmissionswerte bzw. Meßwerte außerhalb des Prüfbereichs 70. Dieser Mittelwert, im Beispiel um 5% erhöht, wird als untere Grenze des Intervalls gesetzt.

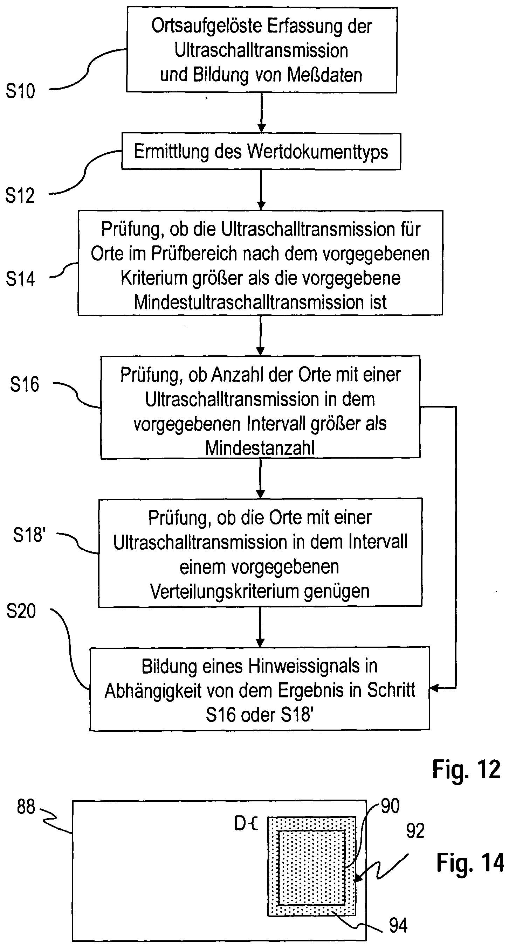

Andere Ausführungsbeispiele unterscheiden sich von den zuvor genannten Ausführungsbeispielen allein dadurch, daß der Schritt S18 ersetzt ist durch einen Schritt S18' und Schritt S20 entsprechend angepaßt ist. Ein solches gegenüber dem ersten Ausführungsbeispiel modifiziertes Ausführungsbeispiel ist in Fig. 12 schematisch gezeigt. Soweit nichts anderes erwähnt ist, sind die Schritte mit derselben Bezeichnung wie im ersten Ausführungsbeispiel auch gegenüber diesem unverändert.

In dem Schritt S18' wird nicht geprüft, ob die Orte, die der vorgegebenen Anzahl von Transmissionswerten entsprechen, ein zusammenhängendes Gebilde bilden, sondern es wird bei der Prüfung auch die Verteilung der Orte in dem vorgegebenen Prüfbereich berücksichtigt, für die die Ultraschalltransmission größer als die Mindestultraschalltransmission ist. Vorzugsweise wird dazu geprüft, ob die Verteilung der Orte in dem vorgegebenen Prüfbereich, für die die Ultraschalltransmission größer als die Mindestultraschalltransmission ist, einem vorgegebenen Verteilungskriterium genügt. Im vorliegenden Beispiel wird dazu das kleinste Rechteck ermittelt, in dem die genannten Orte liegen und die Größe des Rechtecks wird mit der vorgegebenen Größe des Fensters bei Wertdokumenten des vorgegebenen Typs verglichen. Ist die Abweichung der Länge und Breite des Rechtecks von der vorgegebenen Länge bzw. Breite des Fensters geringer als ein vorgegebener Toleranzwert, wird entschieden, daß die Verteilung dem Verteilungskriterium genügt, andernfalls nicht.

Schritt S20 ist dahingehend angepaßt, daß wenn die Prüfungen in Schritt S16, daß die vorgegebene Anzahl erreicht wurde, und S18', ob die Verteilung der Orte in dem vorgegebenen Prüfbereich, für die die Ultraschalltransmission größer als die Mindestultraschalltransmission ist, einem vorgegebenen Verteilungskriterium genügt, positiv ausfallen, die Steuer- und Auswerteeinrichtung 30 in Schritt S20 ein Signal bildet, das einen Hinweis auf die Echtheit des Sicherheitsmerkmals bzw. des Wertdokuments darstellt.

In anderen Ausführungsbeispielen können auch beide Schritte S18 und S18' ausgeführt werden, einen Hinweis auf die Echtheit ergibt sich dann, wenn sowohl die Prüfung in Schritt S18, ob die Orte ein zusammenhängendes Gebilde bilden, als auch die Prüfung der Verteilung der Orte in Schritt S18' ein positives Resultat liefern.

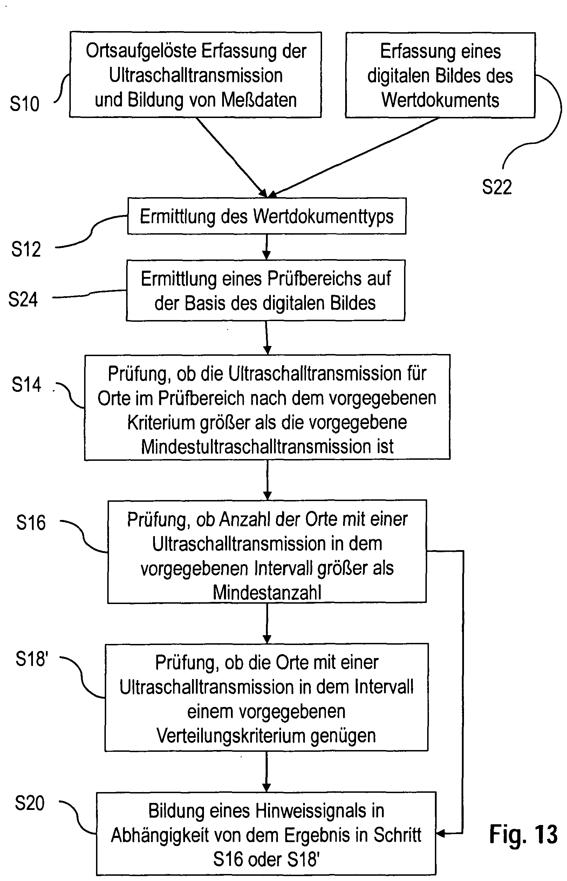

Ein weiteres Ausführungsbeispiel in Fig. 13 unterscheidet sich von dem Ausführungsbeispiel in Fig. 12 dadurch, daß der Prüfbereich in Abhängigkeit von einem digitalen Bild des Wertdokuments festgelegt wird. Soweit in der folgenden Beschreibung dieses Ausführungsbeispiels nichts anderes erwähnt ist, sind die Schritte mit gleichen Bezugszeichen wie in Fig. 12 unverändert.

Vor, während oder nach Schritt S10, wird in Schritt S22 ein digitales Bildes des Wertdokuments mittels des optischen Transmissionssensors 42 erfaßt und die das digitale Bild darstellenden Pixeldaten werden in der Steuer- und Auswerteeinrichtung 46 gespeichert. Vorzugsweise wird dieser Schritt S22 vor dem Schritt S12 ausgeführt.

In Schritt S12 braucht die Lage des Wertdokuments nicht unbedingt ermittelt zu werden.

In Abhängigkeit von dem in Schritt S12 erkannten Wertdokumenttyp wird in Schritt S24 der in den folgenden Schritten zu verwendende Prüfbereich festgelegt. Dies ist in Fig. 14 für ein Wertdokument 88 veranschaulicht. In dem digitalen Bild werden die Position und Größe des Fensters 90 relativ zu dem Wertdokument ermittelt, wozu für den Wertdokumenttyp bekannte Daten in Bezug auf das Fenster in dem Bild des Wertdokuments verwendet werden. Der Prüfbereich 92 wird nun in Position und Größe so festgelegt, daß dieser das im digitalen Bild erkannte Fenster und einen das Fenster umschließenden Rahmen- bzw. Randbereich 94 mit einer in Abhängigkeit in den Herstellungstoleranzen und der Ultraschallfrequenz vorgegebenen Breite D von im Beispiel 2 mm umfaßt. Hierzu werden entsprechende Daten in der Steuer- und Auswerteeinrichtung gespeichert.

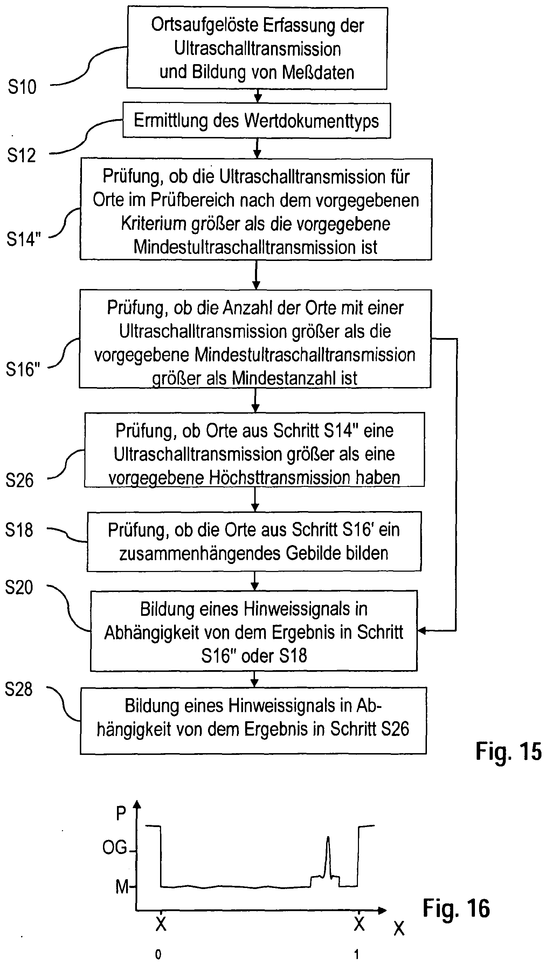

Ein weiteres Ausführungsbeispiel unterscheidet sich von dem ersten Ausführungsbeispiel dadurch, dass zusätzlich eine Prüfung auf den Zustand des Fensters und insbesondere darauf erfolgt, ob das Fenster 68 beschädigt ist. Eine Beschädigung des Fensters, genauer der Folie, führt zu einer wesentlich erhöhten Transmission, wie dies in Fig. 16, grob schematisch veranschaulicht ist. Innerhalb des Fensterbereichs, der zuvor beschrieben wurde, findet sich in dem Beispiel eine Spitze, die von einem Ort stammt, in dem die Folie unterbrochen ist, also ein Loch oder einen Riss aufweist. Die Wertdokumentbearbeitungsvorrichtung und insbesondere die Steuer- und Auswerteeinrichtung ist dann dazu ausgebildet, die Wertdokumente auch in Abhängigkeit von dem Zustand des Fensters zu bearbeiten, in diesem Ausführungsbeispiel zu sortieren.

Fig. 15 zeigt grob schematisch den Ablauf des Verfahrens. Das Verfahren unterscheidet sich von dem Verfahren des ersten Ausführungsbeispiels durch die Schritte S14", S16", S26, S18" und S28. Die anderen Schritte sind unverändert, wobei allerdings statt der Ergebnisse eines der Schritte S14, S16 oder S18 die entsprechenden Ergebnisse der Schritte S14", S16" bzw. S18" verwendet werden. Die weitere Beschreibung der genannten Schritte im ersten Ausführungsbeispiel gilt auch hier entsprechend.

In Schritt S14" wird ähnlich Schritt S14 des ersten Ausführungsbeispiels geprüft, ob die Ultraschalltransmission für Orte im Prüfbereich nach dem vorgegebene Kriterium größer als die vorgegebene Mindestultraschalltransmission ist. Er ist gegenüber dem Schritt S14 dadurch geändert, dass statt der Prüfung, ob die Ultraschalltransmissionen innerhalb des Intervalls liegen, nur geprüft wird, ob diese größer sind als die Mindestultraschalltransmission, die zur Festlegung der unteren Grenze des Intervalls des ersten Ausführungsbeispiels dient. Das Ergebnis der Prüfung wird, wie im ersten Ausführungsbeispiel für jeden Ort gespeichert.

Der Schritt S16" unterscheidet sich dementsprechend von dem Schritt S16 nur darin, dass nicht geprüft wird, ob die die Anzahl der Ultraschalltransmissionswerte für Orte in dem Prüfbereich 70, die innerhalb des Intervalls liegen größer als die vorgegebene Mindestanzahl ist; stattdessen wird geprüft, ob die Anzahl der Orte mit einer Ultraschalltransmission größer als die vorgegebene Mindestultraschalltransmission größer als die Mindestanzahl aus Schritt S16 ist.

In dem neuen Schritt S26 wird nun geprüft, ob Orte aus Schritt S14" eine Ultraschalltransmission aufweisen, die größer eine vorgegebene Höchsttransmission ist. Werden solche Orte gefunden, ist dies ein Hinweis auf eine Beschädigung des Fensters 68. Die Höchsttransmission ist in Abhängigkeit von dem Wertdokumenttyp vorgegeben und die größer ist als eine Ultraschalltransmission, die für Orte in einem Fenster eines unbeschädigten Wertdokuments des vorgegebenen Wertdokumenttyps charakteristisch ist. Im vorliegenden Beispiel ist sie so gewählt, daß sie dem arithmetischen Mittelwert aus der Ultraschalltransmission in Abwesenheit eines Wertdokuments und einem Mittelwert über die Referenzwertdokumente für die Ultraschalltransmission für einen Ort in dem Fenster 68 entspricht. Diese Werte sind vor Ausführung des Verfahrens dem Wertdokumenttyp zugeordnet bereits gespeichert.

In Schritt S28, der nicht unbedingt nach dem unveränderten Schritt S20 durchgeführt zu werden braucht, bildet die Steuer- und Auswerteeinrichtung in Abhängigkeit von dem Ergebnis der Prüfung in Schritt S26 ein Hinweis- bzw. Zustandssignal, das beschreibt, ob ein Hinweis auf einen beschädigten Zustand des Fensters und damit Wertdokuments bzw. eine Beschädigung des Fensters vorliegt oder nicht. Wird in Schritt S26 eine vorgegebenen Anzahl von Orten gefunden, in diesem Ausführungsbeispiel nur ein Ort, wird ein Hinweissignal gebildet, das einen Hinweis auf eine Beschädigung darstellt; andernfalls wird ein Hinweissignal gebildet, das beschreibt, daß ein Hinweis auf einen unbeschädigten Zustand des Fenster bzw. kein Hinweis auf eine Beschädigung gefunden wurde.

Das Wertdokument kann in Abhängigkeit von den beiden Hinweissignalen sortiert werden.

Ein weiteres Ausführungsbeispiel unterscheidet sich von dem vorhergehenden Ausführungsbeispiel durch einen weiteren Schritt, in dem geprüft wird, ob in Schritt S26 gefundene Orte ein zusammenhängendes Gebilde bilden. Ist dies der Fall, wird in Schritt S28 zusätzlich ein Signal gebildet, dass die Anzahl der Orte, optional auch die Form des Gebildes klassifiziert in "Riss" oder "Loch" angibt.

Weitere Ausführungsbeispiele unterscheiden sich von den zuvor beschriebenen Ausführungsbeispielen, bei denen geprüft wird, ob die Ultraschalltransmissionen innerhalb des vorgegebenen Intervalls liegen, dadurch, dass alle Prüfungen, bei denen geprüft wird, ob die Ultraschalltransmission innerhalb des vorgegebenen Intervalls liegt, durch die Schritt S14" entsprechende Prüfung ersetzt werden. Die Ergebnisse dieser geänderten Schritte werden in den folgenden Schritten verwendet. Die Schritte S26 und S28 können dann aus dem Ausführungsbeispiel in Fig. 15 übernommen werden.

Noch weitere Ausführungsbeispiele unterscheiden sich von den zuvor beschriebenen Ausführungsbeispielen dadurch, daß in Schritt S12 die Lage des Wertdokuments nicht ermittelt wird, aber dafür die Schritte S14 und S16 bzw. S14" und S16" für die vier möglichen Lagen durchgeführt werden. Nur wenn wenigstens eine der Prüfungen einen Hinweis auf ein Fenster ergibt, wird dann ein entsprechendes Hinweissignal gebildet.

In anderen Ausführungsbeispielen können als Wertdokumente Wertdokumente eines Wertdokumenttyps verwendet werden, die ein Substrat aus einer Polymerfolie, beispielsweise biaxial gestrecktes Polypropylen, mit einem Durchsichtfenster aufweisen. Ein Wertdokument dieses Wertdokumenttyps ist beispielhaft und schematisch in den Figuren 8 und 9 gezeigt. Das Wertdokument 74, eine Banknote, umfaßt das Substrat 76, das durch die Polymerfolie gebildet wird. Auf beiden Seiten des Substrats 76 befinden sich ganzflächig bis auf einen Bereich 78 drucktechnisch aufgebrachte opafizifizierende Deckschichten 80, die das Druckbild der Banknote tragen. Der Bereich 78 dagegen ist transparent, da dieser nicht durch die Deckschichten 80 abgedeckt ist. Der Bereich 78 bildet daher ein Durchsichtsfenster 82 der Banknote.

Die zuvor genannten Ausführungsbeispiele können für diesen Wertdokumenttyp angepaßt werden. Der Bereich, der zur Ermittlung der Mindestultraschalltransmission dient, kann beispielsweise der in Fig. 8 gezeigte Bereich 84 sein, der Prüfbereich der gepunktete Bereich 86.

## Patentansprüche

1. Verfahren zur Prüfung eines Wertdokuments (12; 60; 74; 88) eines vorgegebenen Wertdokumenttyps mit einem Fenster (68; 82; 90), das einen Folienbereich (66) aufweist, bei dem ortsaufgelöst Meßwerte für eine Ultraschalltransmission des Wertdokuments (12; 60; 74; 88) ermittelt werden, und
bei dem unter Verwendung der Meßwerte geprüft wird, ob für eine vorgegebene Anzahl von Orten in einem vorgegebenen Prüfbereich (70; 86), der so gewählt ist, daß für den Wertdokumenttyp das Fenster in dem Prüfbereich liegt, die Ultraschalltransmission nach einem vorgegebenen Kriterium größer ist als eine vorgegebene Mindestultraschalltransmission, die für einen vorgegebenen außerhalb des Prüfbereichs (70; 86) liegenden Abschnitt (72) wenigstens eines Wertdokuments (12; 60; 74; 88) des vorgegebenen Wertdokumenttyps charakteristisch ist, und
bei dem bei der Prüfung ermittelt wird, ob die jeweilige Ultraschalltransmission innerhalb eines vorgegebenen Intervalls liegt, dessen untere Grenze größer als die vorgegebene Mindestultraschalltransmission ist, und
in Abhängigkeit vom Ergebnis der Prüfung ein Signal gebildet wird, das einen Hinweis auf die Echtheit des Wertdokuments darstellt und/oder das einen Hinweis auf das Vorliegen einer Fälschung des Wertdokuments darstellt, oder das beschreibt, ob ein Hinweis auf einen beschädigten Zustand des Fensters bzw. eine Beschädigung des Fensters vorliegt oder nicht.

2. Verfahren nach Anspruch 1, bei dem der Ultraschall eine Frequenz im Bereich von 50 kHz bis 800 kHz aufweist.

3. Verfahren nach einem der Ansprüche 1 oder 2, bei dem die vorgegebene Mindestultraschalltransmission durch Untersuchungen von Referenzwertdokumenten des vorgegebenen Wertdokumenttyps ermittelt wurde.

4. Verfahren nach einem der Ansprüche 1 oder 2, bei dem vor der Prüfung die vorgegebene Mindestultraschalltransmission unter Verwendung von für das Wertdokument (12; 60; 74; 88) erfaßten Meßwerten ermittelt wird.

5. Verfahren nach einem der vorhergehenden Ansprüche, bei dem geprüft wird, ob für Orte in dem Prüfbereich die Ultraschalltransmission größer als eine vorgegebene Höchsttransmission ist, die vorzugsweise größer ist als eine Ultraschalltransmission, die für Orte in einem Fenster eines unbeschädigten Wertdokuments des vorgegebenen Wertdokumenttyps charakteristisch ist.

6. Verfahren nach Anspruch 5, bei dem, wenn die Prüfung ergibt, dass die Ultraschalltransmission für wenigstens einen der Orte die Höchsttransmission überschreitet, ein Hinweissignal gebildet und abgegeben wird, das anzeigt, dass das Fenster (68; 82; 90) beschädigt ist.

7. Verfahren nach einem der vorhergehenden Ansprüche, bei dem bei der Prüfung auch die Verteilung der Orte in dem vorgegebenen Prüfbereich (70; 86) berücksichtigt wird, für die die Ultraschalltransmission größer als die Mindestultraschalltransmission ist.

8. Verfahren nach einem der vorhergehenden Ansprüche, bei dem zusätzlich geprüft wird, ob die Orte, für die die Ultraschalltransmission größer als die Mindestultraschalltransmission ist und/oder für die die Ultraschalltransmission innerhalb des vorgegebenen Intervalls liegt, ein zusammenhängendes Gebilde bilden, und/oder bei dem zusätzlich geprüft wird, ob mehrere Orte, für die die Ultraschalltransmission größer als die Höchsttransmission ist, ein zusammenhängendes Gebilde bilden.

9. Verfahren nach einem der vorhergehenden Ansprüche, bei dem mittels eines optischen Sensors (42) ein digitales Bild des Wertdokuments (60; 74; 88) erfaßt wird und unter Verwendung des Bildes der Prüfbereich (70; 86) vorgegeben wird.

10. Verfahren nach einem der vorhergehenden Ansprüche, bei dem das Fenster (68) ein Loch (64) in einem Papier- oder Hybridsubstrat (62) des Wertdokuments (60) und wenigstens eine das Loch (64) abdeckende Folie (66) umfaßt.

11. Verfahren nach einem der vorhergehenden Ansprüche, bei dem das Fenster (82) durch einen Bereich (78) eines Wertdokuments (74) mit einem Polymersubstrat (76) gegeben ist, der keine opazifizierende Schicht (80) aufweist.

12. Vorrichtung zur Untersuchung eines Wertdokuments (12; 60; 74; 88) eines vorgegebenen Wertdokumenttyps mit einem Fenster (68; 82; 90), die einen Ultraschalltransmissionssensor (44) zur Erfassung ortsaufgelöster Meßwerte für die Ultraschalltransmission in einem vorgegebenen Frequenzbereich durch das Wertdokument (12; 60; 74; 88), und eine mit dem Ultraschalltransmissionssensor (44) über eine Signalverbindung verbundene Steuer- und Auswerteinrichtung (46) aufweist,
**dadurch gekennzeichnet,**
**dass** die Steuer- und Auswerteinrichtung (46) zur Durchführung eines Verfahrens nach einem der vorhergehenden Ansprüche ausgebildet ist.

13. Vorrichtung zur Bearbeitung von Wertdokumenten (12; 60; 74; 88) mit einer Zuführeinrichtung (14) zum Zuführen vereinzelter Wertdokumente (12; 60; 74; 88), einer Ausgabeeinrichtung (16) zur Aufnahme bearbeiteter Wertdokumente (12; 60; 74; 88), einer Transporteinrichtung (18) zum Transportieren von der Zuführeinrichtung (14) zugeführter, vereinzelter Wertdokumente (12; 60; 74; 88) entlang eines Transportpfades (36) von der Zuführeinrichtung (14) zu der Ausgabeeinrichtung (16),
**dadurch gekennzeichnet,**
**dass** sie eine Untersuchungsvorrichtung (44, 46) nach Anspruch 12 aufweist, bei der der Transportpfad (36) durch den Ultraschalltransmissionssensor (44) verläuft, wobei die Vorrichtung zur Bearbeitung von Wertdokumenten (12; 60; 74; 88) dazu ausgebildet ist, die Wertdokumente (12; 60; 74; 88) in Abhängigkeit von Signalen der Untersuchungsvorrichtung (44, 46) zu bearbeiten, vorzugsweise zu sortieren.

## Claims

1. A method for checking a value document (12; 60; 74; 88) of a specified value-document type having a window (68; 82; 90) which has a foil region (66), in which measurement values for an ultrasound transmission of the value document (12; 60; 74; 88) are established in a spatially resolved manner, and
wherein it is checked while employing the measurement values whether for a specified number of locations in a specified checking region (70; 86), which is selected such that for the value document type the window lies in the checking region, the ultrasound transmission according to a specified criterion is greater than a specified minimum ultrasound transmission that is characteristic of a specified portion (72), lying outside the checking region (70; 86), of at least one value document (12; 60; 74; 88) of the specified value-document type, and
wherein the check involves establishing whether the respective ultrasound transmission lies within a specified interval whose lower limit is greater than the specified minimum ultrasound transmission, and
in dependence on the result of the check a signal is formed which represents an indication of the authenticity of the value document and/or which represents an indication of the presence of a forgery of the value document or which describes whether or not an indication of a damaged state of the window or a damage of the window is present.

2. The method according to claim 1, wherein the ultrasound has a frequency in the range of 50 kHz to 800 kHz.

3. The method according to either of claims 1 to 2, wherein the specified minimum ultrasound transmission was established by examinations of reference value documents of the specified value-document type.

4. The method according to either of claims 1 to 2, wherein before the check the specified minimum ultrasound transmission is established while employing measurement values captured for the value document (12; 60; 74; 88).

5. The method according to any of the preceding claims, wherein it is checked whether for locations in the checking region the ultrasound transmission is greater than a specified maximum transmission which is preferably greater than an ultrasound transmission that is characteristic of locations in a window of an undamaged value document of the specified value-document type.

6. The method according to claim 5, wherein if the check yields that the ultrasound transmission for at least one of the locations exceeds the maximum transmission, an indication signal is formed and emitted which displays that the window (68; 82; 90) is damaged.

7. The method according to any of the preceding claims, wherein the check also involves taking into consideration the distribution of those locations in the specified checking region (70; 86) for which the ultrasound transmission is greater than the minimum ultrasound transmission.

8. The method according to any of the preceding claims, wherein it is additionally checked whether the locations for which the ultrasound transmission is greater than the minimum ultrasound transmission and/or for which the ultrasound transmission lies within the specified interval form a contiguous structure, and/or wherein it is additionally checked whether a plurality of locations for which the ultrasound transmission is greater than the maximum transmission form a contiguous structure.

9. The method according to any of the preceding claims, wherein a digital image of the value document (60; 74; 88) is captured by means of an optical sensor (42), and the checking region (70; 86) is specified while employing the image.

10. The method according to any of the preceding claims, wherein the window (68) comprises a hole (64) in a paper substrate or hybrid substrate (62) of the value document (60) and at least one foil (66) covering the hole (64).

11. The method according to any of the preceding claims, wherein the window (82) is given by a region (78) of a value document (74) having a polymer substrate (76), said region having no opacifying layer (80).

12. An apparatus for examining a value document (12; 60; 74; 88) of a specified value-document type having a window (68; 82; 90), said apparatus having an ultrasound transmission sensor (44) for capturing spatially resolved measurement values for the ultrasound transmission in a specified frequency range through the value document (12; 60; 74; 88), and a control and evaluation device (46) connected to the ultrasound transmission sensor (44) via a signal connection, **characterized in that**
the control and evaluation device (46) is configured for carrying out a method according to any of the preceding claims.

13. An apparatus for processing value documents (12; 60; 74; 88) having a feeding device (14) for feeding singled value documents (12; 60; 74; 88), an output device (16) for receiving processed value documents (12; 60; 74; 88), a transport device (18) for transporting singled value documents (12; 60; 74; 88), fed by the feeding device (14), along a transport path (36) from the feeding device (14) to the output device (16),
**characterized in**
**that** it has an examination apparatus (44, 46) according to claim 12, wherein the transport path (36) extends through the ultrasound transmission sensor (44), with the apparatus for processing value documents (12; 60; 74; 88) being configured for processing, preferably sorting, the value documents (12; 60; 74; 88) in dependence on signals of the examination apparatus (44, 46).

## Revendications

1. Procédé d'examen d'un document de valeur (12; 60; 74; 88) d'un type donné de document de valeur ayant une fenêtre (68; 82; 90) comportant une zone de film (66), dans lequel des valeurs de mesure pour une transmission d'ultrasons du document de valeur (12; 60; 74; 88) sont déterminées de manière résolue localement,
et
dans lequel, en utilisant les valeurs de mesure, il est examiné si, pour un nombre donné d'endroits dans une zone d'examen (70; 86) donnée choisie de telle manière que, pour le type de document de valeur, la fenêtre se trouve dans la zone d'examen, la transmission d'ultrasons selon un critère donné est supérieure à une transmission minimum d'ultrasons donnée qui, pour une section (72) donnée d'au moins un document de valeur (12; 60; 74; 88) du type donné de document de valeur se trouvant à l'extérieur de la zone d'examen (70; 86), est caractéristique, et
dans lequel, lors de l'examen, il est déterminé si la transmission d'ultrasons respective se situe à l'intérieur d'un intervalle donné dont la limite inférieure est supérieure à la transmission minimum d'ultrasons donnée,
et
en fonction du résultat de l'examen, un signal est formé, lequel représente une indication de l'authenticité du document de valeur et / ou représente une indication de la présence d'une falsification du document de valeur, ou décrit s'il y a présence ou non d'une indication d'un état endommagé de la fenêtre ou d'un endommagement de la fenêtre.

2. Procédé selon la revendication 1, dans lequel les ultrasons présentent une fréquence comprise entre 50 kHz et 800 kHz.

3. Procédé selon une des revendications 1 ou 2, dans lequel la transmission minimum d'ultrasons donnée a été déterminée par des examens de documents de valeur de référence du type donné de document de valeur.

4. Procédé selon une des revendications 1 ou 2, dans lequel, avant l'examen, la transmission minimum d'ultrasons donnée est déterminée en utilisant les valeurs de mesure saisies pour le document de valeur (12; 60; 74; 88).

5. Procédé selon une des revendications précédentes dans lequel il est examiné si, pour des endroits situés dans la zone d'examen, la transmission d'ultrasons est supérieure à une transmission maximum donnée qui est de préférence supérieure à une transmission d'ultrasons qui, pour des endroits situés dans une fenêtre d'un document de valeur non endommagé du type donné de document de valeur, est caractéristique.

6. Procédé selon la revendication 5, dans lequel, si l'examen révèle que la transmission d'ultrasons dépasse pour au moins un des endroits la transmission maximum, un signal d'indication est formé et émis, lequel annonce que la fenêtre (68; 82; 90) est endommagée.

7. Procédé selon une des revendications précédentes, dans lequel, lors de l'examen, aussi la répartition des endroits dans la zone d'examen (70; 86) donnée pour lesquels la transmission d'ultrasons est supérieure à la transmission minimum est prise en compte.

8. Procédé selon une des revendications précédentes, dans lequel il est en outre examiné si les endroits pour lesquels la transmission d'ultrasons est supérieure à la transmission minimum et / ou pour lesquels la transmission d'ultrasons se situe à l'intérieur de l'intervalle donné forment un ensemble cohérent, et / ou dans lequel il est en outre examiné si plusieurs endroits pour lesquels la transmission d'ultrasons est supérieure à la transmission maximum forment un ensemble cohérent.

9. Procédé selon une des revendications précédentes, dans lequel, au moyen d'un capteur optique (42), une image numérique du document de valeur (60; 74; 88) est saisie, et, en utilisant l'image, la zone d'examen (70; 86) est donnée.

10. Procédé selon une des revendications précédentes, dans lequel la fenêtre (68) comprend un trou (64) dans un substrat en papier ou hybride (62) du document de valeur (60) et au moins un film (66) recouvrant le trou (64).

11. Procédé selon une des revendications précédentes, dans lequel la fenêtre (82) est obtenue par une zone (78) d'un document de valeur (74) comportant un substrat polymère (76) ne comportant pas de couche opacifiante (80).

12. Dispositif d'examen d'un document de valeur (12; 60; 74; 88) d'un type donné de document de valeur ayant une fenêtre (68; 82; 90), qui comporte un capteur de transmission d'ultrasons (44) pour la saisie de valeurs de mesure à résolution locale pour la transmission d'ultrasons dans une plage de fréquences donnée par le document de valeur (12; 60; 74; 88), et un équipement de commande et d'évaluation (46) relié au capteur de transmission d'ultrasons (44) par l'intermédiaire d'une liaison de signalisation,
**caractérisé en ce que**
l'équipement de commande et d'évaluation (46) est conçu pour l'exécution d'un procédé selon une des revendications précédentes.

13. Dispositif de traitement de documents de valeur (12; 60; 74; 88), comprenant un équipement d'acheminement (14) pour l'acheminement de documents de valeur (12; 60; 74; 88) déliassés, un équipement de délivrance (16) pour la réception de documents de valeur (12; 60; 74; 88) traités, un équipement de transport (18) pour le transport, le long d'un chemin de transport (36) de l'équipement d'acheminement (14) à l'équipement de délivrance (16), de documents de valeur (12; 60; 74; 88) déliassés acheminés par l'équipement d'acheminement (14),
**caractérisé en ce**
**qu'**il comporte un dispositif d'examination (44, 46) selon la revendication 12, dans lequel le chemin de transport (36) passe par le capteur de transmission d'ultrasons (44), cependant que le dispositif de traitement de documents de valeur (12; 60; 74; 88) est conçu pour, en fonction de signaux du dispositif d'examination (44, 46), traiter les documents de valeur (12; 60; 74; 88), de préférence les trier.
